Europäisches Patentamt

European Patent Office

Office européen des brevets

(11) Veröffentlichungsnummer: **0 231 231**
**B1**

(12) **EUROPÄISCHE PATENTSCHRIFT**

(45) Veröffentlichungstag der Patentschrift: **19.09.90**

(51) Int. Cl.⁵: **G 01 N 27/12**

(21) Anmeldenummer: **86904172.3**

(22) Anmeldetag: **18.07.86**

(86) Internationale Anmeldenummer:
**PCT/EP86/00423**

(87) Internationale Veröffentlichungsnummer:
**WO 87/00634 29.01.87 Gazette 87/03**

(54) **VERFAHREN ZUR SCHADSTOFFINDIKATION FÜR DIE EINER DEM AUFENTHALT VON PERSONEN DIENENDEN KABINE OD.DGL. ZUGEFÜHRTEN LUFT.**

(30) Priorität: **19.07.85 DE 3525774**
**28.04.86 DE 3614314**
**13.05.86 DE 3616052**

(43) Veröffentlichungstag der Anmeldung:
**12.08.87 Patentblatt 87/33**

(45) Bekanntmachung des Hinweises auf die
Patenterteilung:
**19.09.90 Patentblatt 90/38**

(84) Benannte Vertragsstaaten:
**AT BE CH DE FR GB IT LI LU NL SE**

(56) Entgegenhaltungen:
**WO-A-86/04143**
**FR-A-2 352 298**
**GB-A-2 044 491**
**US-A-3 851 520**
**US-A-3 923 461**

(73) Patentinhaber: **Hölter, Heinz, Dipl.-Ing.**
**Beisenstrasse 39-41**
**D-4390 Gladbeck (DE)**

(72) Erfinder: **IGELBÜSCHER, Heinrich**
**Marcq-en-Baroeul-Strasse 60**
**D-4390 Gladbeck (DE)**
Erfinder: **GRESCH, Heinrich**
**Franz-Lehàr-Strasse 25**
**D-4600 Dortmund-Wickede (DE)**
Erfinder: **DEWERT, Heribert**
**Bahnhofstrasse 23**
**D-4390 Gladbeck (DE)**
Erfinder: **RUMP, Hanns**
**Biesenkamp 24**
**D-4750 Unna-Massen (DE)**
Erfinder: **HÖLTER, Heinz**
**Beisenstrasse 39-41**
**D-4390 Gladbeck (DE)**

(74) Vertreter: **Spalthoff, Adolf, Dipl.-Ing.**
**Pelmanstrasse 31 Postfach 34 02 20**
**D-4300 Essen 1 (DE)**

Courier Press, Leamington Spa, England.

## Beschreibung

Die Erfindung betrifft ein Verfahren zur Schadstoffindikation für die einer dem Aufenthalt von Personen dienenden Kabine od.dgl., vorzugsweise eines Kraftfahrzeuges, zugeführten Luft, mit einer Fehlerkompensation für Feuchtigkeit und Temperatur an einem oder mehreren Verwendung findenden Halbleiter-Gas-Sensoren, wobei eine Sensorheizspannung auf konstante Beheizungsleistung geregelt wird und en Sensortemperaturfühler sowie ein erforderlicher Verstärker einer Regelstufe zur Erzeugung der temperatur-geführten Heizspannung in einem gemeinsamen Gehäuse angeordnet sind und im Bereich des Sensors das Gehäuse perforiert ausgebildet ist, wobei die Heizleistung in Abhängigkeit von der Lufttemperatur gesteuert wird.

Um die in der einem Aufenthalt von Personen dienenden Kabinen zugeführten Luft enthaltenen Schadstoffe zu beseitigen ist es erforderlich, diese zunächst zu erkennen, um dann Signale und/oder Stellgrößen zu erzeugen, um Filterreinigungen und/oder Lüftugssysteme ein- bzw. auszuschalten.

Es ist bereits vorgeschlagen worden, zur Erfassung von Schadstoffen in der Luft Analysengeräte vorzusehen, welche jedoch in ihrer Anschaffung und in ihrem Betrieb vergleichsweise aufwendig sind, ganz abgesehen davon, daß diese nur in der Lage sind, einzelne Schadstoffkomponenten zu erfassen.

Weiterhin ist es bekannt, Halbleitersensoren für diese Zwecke zu verwenden, welche im allgemeinen die Forderung erfüllen, auf die üblichen Luftverunreinigungen anzusprechen. Der Arbeitsbereich dieser Sensoren liegt in bezug auf ihre Ansprechempfindlichkeit jedoch wesentlich über de für den Menschen noch unbedenklichen Konzentration vieler Schadstoffe. Außerdem sind Halbleitersensoren empfindlich gegen Temperaturschwankungen und unterschiedliche Strömungsgeschwindigkeiten der zu überwachenden Luftströme. Weiterhin sind die Ansprechzeiten dieser Sensoren besonders im Bereich niedrigerer Konzentrationen und ihre Dekontaminierungszeiten zu hoch, um beispielsweise zur Steuerung von Filtereinrichtungen und/oder Lüftungssystemen in Kraftfahrzeugkabinen Verwendung finden zu können.

Durch die WO—A—86 041 43 ist ein Verfahren zur Indikation von Schadstoffen in Luft mit einer Temperaturkompensation an einem Halbleiter-Gas-Senor bekannt. Bei diesem Verfahren wird der Sensor in Abhängigkeit von der Lufttemperatur (Umgebungstemperatur) beheizt. Temperaturfühler und Reizregelstufe sind in einem gemeinsamen perforierten Gehäuse untergebracht.

Durch die GB—A—20 44 491 ist ebenfalls ein Verfahren zur Indikation von Stoffen in Luft vorgenannter Art bekannt, jedoch nicht in seiner Anwendung auf die dem Aufenthalt von Personen dienenden Kabine od.dgl. zugeführten Luft.

Von diesem Stand der Technik ausgehend liegt der Erfindung die Aufgabe zugrunde, unter Vermeidung vorerwähnter Nachteile ein wirtschaftlich anspruchsloses, wartungsfreies Verfahren mit geringem Raumbedarf zu schaffen, mit welchem in einfacher und genauer Weise eine Kompensation der durch Feuchtigkeit, Temperatur od.dgl. am Sensor hervorgerufenen Fehler gewährleistet ist.

Um die Fehler des erfaßten, schadstoff-, temperatur- und feuchtekorrelierten Ausgangssignals kompensieren zu können wird erfindungsgemäß vorgeschlagen, daß der Sensor Teil eines Ohm-'schen Spannungsteils ist, daß ein Teil des Spannungsteilers als temperaturabhängiger Widerstand ausgebildet ist, wobei die Temperatureinflüsse auf die Heizspannung und den temperaturabhängigen Widerstand so aufeinander abgestimmt werden, daß sie im Zusammenwirken mit dem Temperaturverhalten des verwendeten Sensors sich gegenseitig kompensieren. Die Kennlinien des Sensors sind in dem Spannungsteiler nachgebildet, der außerhalb des Sensors gemeinsam mit dem Sensor einen Spannungsteiler hin zur gemeinsamen Versorgungsspannung bildet, dergestalt, daß die Einflußgrößen in gleicher proportionaler Wert-änderung sowohl des Sensors als auch der Außenbeschaltung sich gegenseitig kompensieren. Ergebnisgemäß bleibt das Ausgangssignal über die Temperatur konsant. Gleichzeitig wird die Sensorheizleistung ebenfalls in Abhängigkeit von der Temperatur verändert.

Bei kleinen Temperaturen wird die Heizspannung (damit die Leistung) erhöht, bei höheren Temperaturen verringert.

In der bevorzugten Ausführung beträgt die Heizspannung bei 20 Grad C 5 V.

Es ist charakteristisch für die SnO2-Detektoren, daß die Abhängigkeit von der absoluten Luftfeuchte in hohem Maße an das Vorhandensein des Gases CO gebunden ist.

Die Empfindlichkeit des Sensors, CO gegenüber, ist bei wechselnder Heizungsleistung in einem kleineren Bereich zwischen etwa 4,8 und 5,2 Volt nahezu konstant, während die Empfindlichkeit anderen Gasen gegenüber mit zunehmender Heizleistung abnimmt.

Die temperaturabhängige Modulation der Heizspannung und die Bemessung des Widerstandsnetzwerkes im Meßzweig sind so dimensioniert, daß die Ausgangswerte bei komplexen Signalen, wie sie im Straßenverkehrsabgas vorhanden sind, und immer sowohl CO als auch andere Verbindungen enthalten, durch die Kombination von Heizmodulation und Spannungsteilernetzwerk den Einfluß der Feuchte dadurch zurückdrängen, weil die absolute Feuchte in hohem Maße an die Lufttemperatur gekoppelt ist, der Temperaturfluß die Heizspannung und damit die Empfindlichkeit allen Gasen außer CO gegenüber verändert, und der Spannungsteiler im Meßzweig zusätzlich zur reinen Temperaturempfindlichkeit diese zusätzliche Änderung ebenfalls mit berücksichtigt.

Ein Ausführungsbeispiel der Erfindung ist an Hand der Zeichnung näher erläutert, und zwar zeigt:

Figur 1 eine Schaltungsanordnung zur Kompensation der Einflüsse von Temperatur und Luftfeuchte und

Figur 2 bis 4 Kennlinien der verwendeten Sensoren.

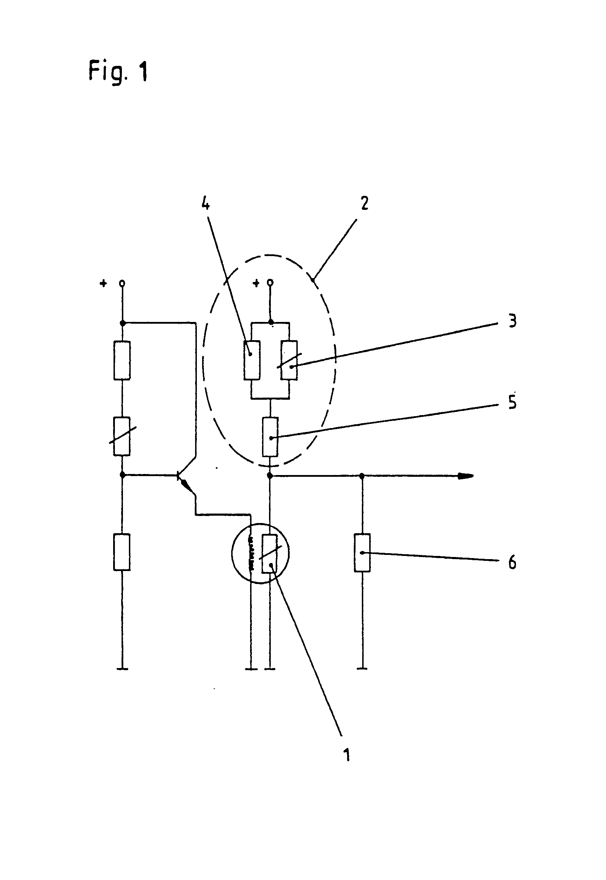

In Figur 1 ist der Sensor mit 1 und der Außenwiderstand mit 2 bezeichnet.

Der Außenwiderstand 2 besteht aus einem temperaturabhängigen Widerstand mit positivem Temperaturkoeffizienten 3 sowie einem parallel geschalteten Linearisierungswiderstand 4 und einem längsgeschalteten Begrenzungswiderstand 5. Parallel zum Sensor 1 ist ein Linearisierungswiderstand 6 geschaltet, um die nicht lineare Kennlinie des Sensors 1 zu linearisieren.

Die Modulation der Heizspannung wird als Spannungsmodulation durchgeführt, in dem im Positiven Zweig ein PTC-Widerstand angebracht ist. Es ist auch möglich, im negativen Zweig des Spannungsteilers einen NTC-Widerstand vorzusehen.

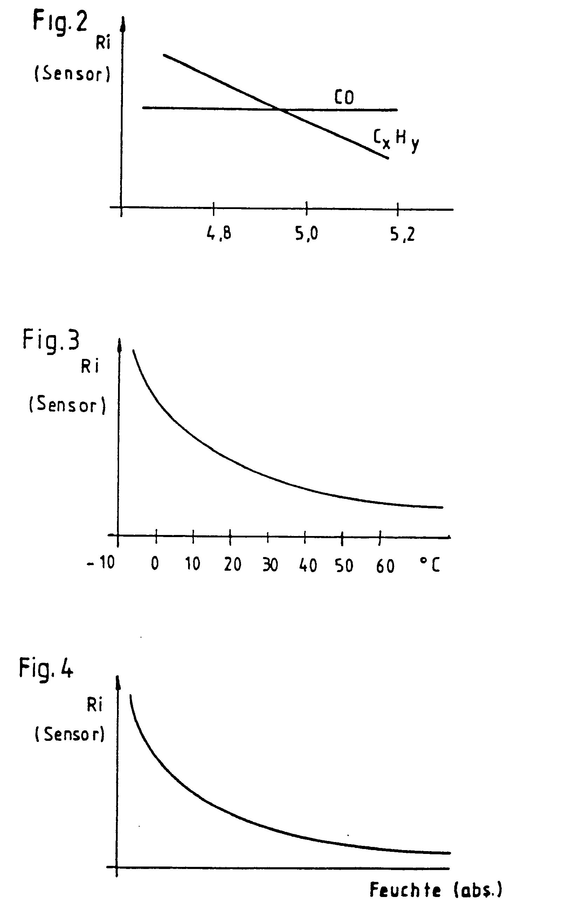

Das Kennlinienfeld nach Figur 2 zeigt die Abhängigkeit der Sensorempfindlichkeit von der Heizspannung bei verschiedenen Gasen.

Im Kennlinienfeld nach Figur 3 ist der Verlauf der unkorrigierten Sensorempfindlichkeitskurve bei komplexen Gas-gemischen, z.B. Autoabgasen, dargestellt.

Aus Figur 4 ist die Abhängigkeit des inneren Sensorwiderstandes bei CO = 20 ppm in Abhängigkeit von der absoluten Luftfeuchte ersichtlich.

**Patentanspruch**

Verfahren zur Schadstoffindikation für die einer dem Aufenthalt von Personen dienenden Kabine od.dgl., vorzugsweise eines Kraftfahrzeuges, zugeführten Luft mit einer Fehlerkompensation für Feuchtigkeit und Temperatur an einem oder mehreren Verwendung findenden Halbleiter-Gas-Sensoren (1), wobei eine Sensorheizspannung auf konstante Beheizungsleistung geregelt wird und ein Sensortemperaturfühler sowie ein erforderlicher Verstärker einer Regelstufe zur Erzeugung der temperaturgeführten Heizspannung in einem gemeinsamen Gehäuse angeordnet sind und im Bereich des Sensors das Gehäuse perforiert ausgebildet ist, wobei die Heizleistung in Abhängigkeit von der Lufttemperatur gesteuert wird, dadurch gekennzeichnet, daß der Sensor (1) Teil eines Ohm'schen Spannungsteilers ist, daß ein Teil des Spannungsteilers als temperaturabhängiger Widerstand (3) ausgebildet ist, wobei die Temperatureinflüsse auf de Heizspannung und den temperaturabhängigen Widerstand (3) so aufeinander abgestimmt werden, daß sie im Zusammenwirken mit dem Temperaturverhalten des verwendeten Sensors (1) sich gegenseitig kompensieren.

**Revendication**

Procédé d'indication de matière nocive, dans l'air amené à une cabine ou analogue, de préférence à une cabine de véhicule automobile, servant au séjour de personnes, avec une compensation d'erreur pour l'humidité et la température sur un ou plusieurs capteurs de gaz à semiconducteur (1), une tension de chauffage de capteur étant régulée à puissance de chauffage constante, et une sonde de température à capteur ainsi qu'un amplificateur que doit avoir un étage de régulation pour produire la tension de chauffage pilotée en température étant agencés dans un boîtier commun qui est perforé dans la région du capteur, la puissance de chauffage étant commandée en fonction de la température de l'air caractérisé par le fait que le capteur (1) fait partir d'un diviseur de tension ohmique, par le fait qu'une partie du diviseur de tension est réalisée en tant que résistance dépendant de la température (3), les influences de température sur la tension de chauffage et sur la résistance dépendant de la température (3) étant mutuellement accordées de manière à se compenser mutuellement, en coopération avec le comportement en température du capteur utilisé (1).

**Claim**

A method of indicating pollutants in the air supplied to a cubicle or the like, preferably the cabin of a motor vehicle, intended for the accommodation of persons and comprising error compensation for humidity and temperature at one or more semiconductor-gas sensors (1) which are used, a sensor heating voltage being regulated to a constant heating output and a sensor temperature probe and possibly an amplifier of a regulating stage for generating the temperature-dependent heating voltage being disposed in a common housing which is perforated in the region of the sensor, the heating output being controlled as a function of the air temperature, characterised in that the sensor (1) is part of an ohmic potential divider and in that a part of the potential divider is constructed as a temperature dependent resistance (3), the temperature influences on the heating voltage and on the temperature-dependent resistance (3) being so attuned to each other that they are mutually compensating in conjunction with the temperature behaviour of the sensor (1) used.

EP 0 231 231 B1

Fig. 1

1

Fig. 2

Ri (Sensor)

CO

$C_x H_y$

4,8    5,0    5,2

Fig. 3

Ri (Sensor)

- 10   0   10   20   30   40   50   60   °C

Fig. 4

Ri (Sensor)

Feuchte (abs.)

2